# NEUE EUROPÄISCHE PATENTSCHRIFT

(11) **EP 1 677 941 B2**
(45) Veröffentlichungstag und Bekanntmachung des Hinweises auf die Entscheidung über den Einspruch: **12.10.2011**
(45) Hinweis auf die Patenterteilung: 16.07.2008
(21) Anmeldenummer: 04789553.7
(22) Anmeldetag: 21.10.2004
(51) Int. Cl.: B23K 9/12

(54) **VERFAHREN ZUM STEUERN UND/ODER REGELN EINES SCHWEISSPROZESSES**
METHOD FOR CONTROLLING AND/OR ADJUSTING A WELDING PROCESS
PROCEDE POUR PILOTER ET/OU REGLER UN PROCESSUS DE SOUDAGE

(30) Priorität: 23.10.2003 AT 16872003
(43) Veröffentlichungstag der Anmeldung: 12.07.2006
(73) Patentinhaber: Fronius International GmbH, 4643 Pettenbach (AT)
(72) Erfinder: ARTELSMAIR, Josef, A-4552 Wartberg/Krems (AT)
(74) Vertreter: Sonn & Partner Patentanwälte
(86) Internationale Anmeldenummer: PCT/AT2004/000364
(87) Internationale Veröffentlichungsnummer: WO 2005/042200

(56) Entgegenhaltungen:
- EP-A1- 0 774 317
- US-A- 4 533 817

## Beschreibung

Die Erfindung betrifft ein Verfahren zum Steuern und/oder Regeln eines Schweißprozesses, bei dem nach dem Zünden eines Lichtbogens ein aus mehreren unterschiedlichen Schweißparametern eingestellter Schweißprozess, der von einer Steuervorrichtung und/oder einer Schweißstromquelle gesteuert bzw. geregelt wird, durchgeführt wird.

Aus der EP 0 774 317 B1 ist ein Impulslichtbogenschweißverfahren zum Schweißen mittels Zuführung eines impulsartigen Stroms und eines Basisstroms abwechselnd über eine Verbrauchselektrode und ein Basismetall bekannt. Bei diesem Verfahren wird die Lichtbogenlänge so gesteuert, dass der Mittelwert oder der integrierte Wert der Zeit einem Sollwert entspricht. Bei größerem Mittelwert oder integriertem Wert der Zeit wird der Basisstrom verringert, bei kleinerem Wert erhöht. Des weiteren kann auch die Zuführzeit des Impulsstroms und des Basisstroms aufgrund der Ermittlung der Lichtbogenlänge verringert bzw. erhöht werden. Üblicherweise wird die Lichtbogenlänge und somit der Abstand des Schweißdrahtendes zum Werkstück durch Messen der Schweißspannung und des Schweißstroms und anschließendes Berechnen ermittelt. Der Nachteil der oben genannten Erfindung liegt darin, dass die Position bzw. der Abstand des Schweißdrahtendes zum Werkstück durch die verschiedensten Einflüsse in den Schweißprozessen nicht exakt bestimmbar ist.

Die Aufgabe der vorliegenden Erfindung besteht daher in der Schaffung eines oben genannten Verfahrens zum Steuern und/oder Regeln eines Schweißprozesses, bei dem die Position bzw. der Abstand des Schweißdrahtendes zu einem Werkstück bestimmt werden kann.

Diese Aufgabe wird dadurch gelöst, dass während des Schweißprozesses zumindest ein mechanischer Abgleichsprozess zur Ermittlung der Position des Schweißdrahtes durchgeführt wird, wobei der Schweißdraht als Sensor verwendet wird, dass während des mechanischen Abgleichsprozesses eine Kontaktierung des Schweißdrahtes mit dem Werkstück durchgeführt wird, indem der Schweißdraht zum Werkstück bewegt wird, und dass der Schweißdraht nach der Kontaktierung mit dem Werkstück zurück bewegt wird. Dabei kann der Abgleichsprozess nach einer oder mehreren Prozessphasen des Schweißprozesses ausgelöst werden.

Der Vorteil liegt darin, dass die Position des Schweißdrahtes, bzw. des Schweißdrahtendes zum Werkstück mechanisch bestimmt bzw. ermittelt wird und dadurch eine genaue Lichtbogenlängenregelung erreicht wird. Durch die mechanische Positionsbestimmung wird weitestgehend vermieden, dass das Abgleichsverfahren durch den Schweißprozess beeinflusst wird, wodurch eine sehr hohe Genauigkeit erreicht wird. Bei den aus dem Stand der Technik bekannten Verfahren zum Steuern und/oder Regeln eines Schweißprozesses kann die Position des Schweißdrahtendes nur während des Schweißprozesses berechnet bzw. gemessen werden, wodurch eine immense Regel-Zeitverzögerung stattfindet und außerdem nur ein "relatives" Ergebnis geliefert und somit die genaue Position des Schweißdrahtendes zum Werkstück nicht bestimmt bzw. ermittelt werden kann. Ein wesentlicher Vorteil am vorliegenden Verfahren liegt darin, dass diese Art der Positionsbestimmung auch dann eingesetzt werden kann, wenn Kombinationen von Drahtwerkstoffen, Gasen usw. verwendet bzw. eingesetzt werden, bei denen sich die Lichtbogenspannung nicht proportional zu der Lichtbogenlänge verhält, wodurch eine exakte Bestimmung durch Messen oder Berechnen der Lichtbogenlänge nicht möglich ist. Des weiteren kann auch aufgrund von Bewegungen des Lichtbogens am Werkstück die Lichtbogenlänge eine Änderung erfahren, ohne dass sich der Abstand vom Schweißdrahtende zum Werkstück ändert, was sich auch negativ auf die Genauigkeit einer Berechnung auswirken würde.

Bei der erfindungsgemäßen Ermittlung der Schweißdrahtposition ist nur eine sehr geringe Regel- bzw. Steuerbelastung der Steuervorrichtung für die Abstandsbestimmung notwendig. Zum Starten des Schweißprozesses, also zum Zünden des Lichtbogens, kann ein bekanntes Verfahren, beispielsweise das so genannte Lift-Arc Prinzip verwendet werden.

Von Vorteil ist eine Ausgestaltung nach den Ansprüchen 2 bis 5, da dadurch ein absoluter, genauer Abstand des Schweißdrahtendes zum Werkstück definiert wird. Bei der Kontaktierung des Schweißdrahtes mit dem Werkstück wird ein Kurzschluss ausgelöst und erkannt, wobei ein Wert für den Abstand des Schweißdrahtes zum Werkstück auf Null gesetzt wird. Bei dieser Art der Positionsermittlung wird keine komplizierte Spannungsmessung, sondern lediglich eine sehr einfache Messung der Spannung um einen Kurzschluss zu erkennen, durchgeführt.

Von Vorteil ist eine Ausgestaltung nach den Ansprüchen 6 und 7, da nach der Kontaktierung der Schweißdraht eine definierte Rückwärtsbewegung, also eine Bewegung vom Werkstück in Richtung des Schweißbrenners durchführt. Damit wird eine ständige Abstandsanpassung des Schweißdrahtendes gegenüber dem Werkstück auf einen definierten Sollwert durchgeführt, ohne dass dabei schweißprozessbedingte Einflüsse einwirken.

Ein weiterer Vorteil liegt in der Ausgestaltung nach den Ansprüchen 8 bis 10, da das Auslösen des mechanischen Abgleichsprozesses entweder vom Hersteller festgelegt, vom Benutzer eingestellt oder auch von einem Triggersignal, welches von unterschiedlichen Parametern während der Schweißung ausgelöst wird, gesteuert bzw. geregelt werden, wodurch in vorteilhafter Art und Weise durch oftmaliges Ausführen des Abgleichsprozesses eine Korrektur des Abstandes auf den definierten Sollwert durchgeführt wird.

Es ist aber auch eine Ausgestaltung nach Anspruch 11 von Vorteil, da durch die Erhöhung der Drahtfördergeschwindigkeit während des Abgleichsprozesses der Schweißprozess nur unwesentlich bzw. gar nicht verzögert bzw. unterbrochen wird.

Von Vorteil ist eine Ausgestaltung nach Anspruch 12, da der Abgleichsprozess bei einem Puls-Schweißprozess in der Grundstromphase und somit zwischen zwei Pulsstromphasen stattfindet, so dass nur eine unwesentliche Störung des Puls-Schweißprozesses stattfindet.

Ein weiterer Vorteil wird in der Ausgestaltung nach Anspruch 13 dargelegt, da damit eine Erkennung der Länge des Schweißdrahtes, welcher aus der Kontaktdüse des Schweißbrenners ragt, der so genannten "Stickout-Länge", in einfacher Form zusätzlich zu der Positionierung des Schweißdrahtes durchgeführt werden kann.

Es ist aber auch eine Ausgestaltung nach den Ansprüchen 14 und 15 von Vorteil, da durch die erneute Zündung des Lichtbogens der Schweißprozess nach dem mechanischen Abgleichsprozess problemlos fortgesetzt wird.

Von Vorteil ist eine Ausgestaltung nach Anspruch 16, da dadurch erreicht wird, dass beim Start der Schweißung bzw. des Schweißprozesses die Position des Schweißdrahtendes zum Werkstück auf einen definierten Wert, insbesondere einen vorgegebenen Sollwert, eingestellt wird, wodurch von Beginn an eine problemlose Schweißung ermöglicht wird.

Ein weiterer Vorteil wird in der Ausgestaltung nach den Ansprüchen 17 und 18 dargelegt, da dadurch eine weitere problemlose Schweißung nach Beendigung einer ersten Schweißung gestartet werden kann, da die Position des Schweißdrahtendes gegenüber dem Werkstück ermittelt ist, und das Ergebnis dieser Ermittlung sowie der Ermittlung der Länge des vom Schweißstrom durchflossenen Schweißdrahtes einer Robotersteuerung weitergeleitet wird.

Die vorliegende Erfindung wird anhand der beigefügten Zeichnungen näher erläutert.

Darin zeigen:
Fig. 1 eine schematische Darstellung einer Schweißmaschine bzw. eines Schweißgerätes;
Fig. 2 den zeitlichen Verlauf der Schweißspannung während einer Ausführungsvariante des erfindungsgemäßen Verfahrens;
Fig. 3 den zeitlichen Verlauf des zugehörigen Schweißstroms I;
Fig. 4 den zugehörigen zeitlichen Verlauf der Geschwindigkeit der Drahtförderung;
Fig. 5 den zeitlichen Verlauf der schematisch dargestellten Position des Schweißdrahtes;
Fig. 6 bis 9 die zeitlichen Verläufe der Spannung U des Schweißstromes I der Drahtfördergeschwindigkeit V und der Position des Schweißdrahtes entsprechend einem weiteren Ausführungsbeispiel des erfindungsgemäßen Verfahrens;
Fig. 10 bis 13 die zeitlichen Verläufe der Schweißspannung U des Schweißstromes I der Drahtfördergeschwindigkeit V und der schematischen Position des Schweißdrahtes entsprechend einem weiteren Ausführungsbeispiel des erfindungsgemäßen Verfahrens; und
Fig. 14 bis 17 die zeitlichen Verläufe der Schweißspannung U des Schweißstromes I der Drahtfördergeschwindigkeit V und der schematischen Position des Schweißdrahtes entsprechend einem weiteren Ausführungsbeispiel der vorliegenden Erfindung.

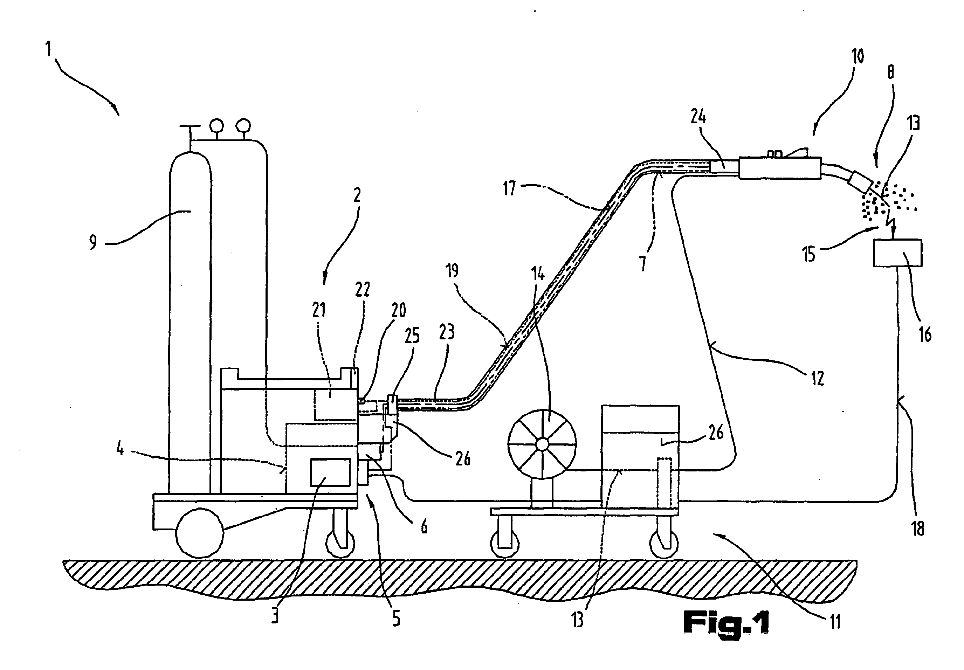

In Fig. 1 ist ein Schweißgerät 1 bzw. eine Schweißanlage für verschiedenste Prozesse bzw. Verfahren, wie z.B. MIG/MAG-Schweißen bzw. WIG/TIG-Schweißen oder Elektroden-Schweißverfahren, Doppeldraht/Tandem-Schweißverfahren, Plasma- oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt, wobei hierzu im Schweißbrenner 10 bevorzugt eine nicht abschmelzende Elektrode angeordnet ist, wie dies beim WIG/TIG-Schweißen üblich ist.

Der Strom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 bzw. den gebildeten Plasmastrahl für einen Prozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 weist des weiteren eine Ein- und/oder Ausgabevorrichtung 22 auf, über welche die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Des weiteren ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise WIG-Geräte oder MIG/MAG-Geräte oder Plasmageräte nicht alle zuvor benannten Komponenten verwendet bzw. eingesetzt werden müssen. Hierzu ist es beispielsweise möglich, dass der Schweißbrenner 10 als lüftgekühlter Schweißbrenner 10 ausgeführt werden kann.

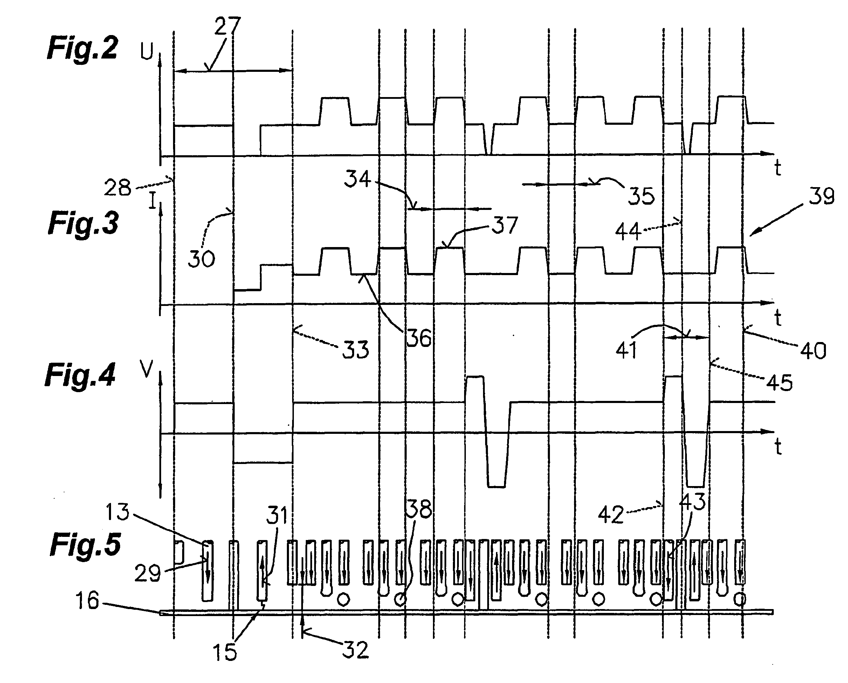

In den Figuren 2 bis 5 ist der zeitliche Verlauf der Schweißspannung U des Schweißstromes I der Geschwindigkeit V der Drahtförderung und der Position des Schweißdrahtes gemäß einer Ausführungsform des erfindungsgemäßen Verfahrens dargestellt. Das Beispiel wird anhand eines Puls-Schweißprozesses erläutert.

Eine Startphase 27 des dargestellten Puls-Schweißprozesses wird in Form des so genannten "Lift-Arc Prinzips" durchgeführt. Bei diesem Kontaktzündverfahren wird der Schweißdraht 13 auf das Werkstück 16 aufgesetzt und danach unter Zuschaltung des Schweißstromes I leicht abgehoben, wodurch ein Lichtbogen 15 gezündet wird. Dabei wird zum Start des Puls-Schweißprozesses, also beim erstmaligen Betätigen des Tasters des Schweißbrenners 10 eine begrenzte Schweißspannung U angelegt (siehe Zeitpunkt 28). Zeitgleich mit dem Anlegen der Schweißspannung U wird der Schweißdraht 13 in Richtung des Werkstückes 16 entsprechend der Richtung des Pfeiles 29 bewegt. Bei Kontaktierung des Schweißdrahtes 13 mit dem Werkstück 16 entsteht zum Zeitpunkt 30 ein Kurzschluss, und die Schweißspannung U bricht zusammen. Dies wird von der Steuervorrichtung 4 des Schweißgerätes 1 erkannt, worauf der Schweißstrom I derart begrenzt erhöht wird, dass ein Anschmelzen des Schweißdrahtes 13 vermieden wird. Anschließend wird die Drahtförderung umgekehrt, also der Schweißdraht 13 in Richtung des Pfeiles 31 vom Werkstück 16 weg bewegt. Beim Abheben des Schweißdrahtes 13 vom Werkstück 16 wird ein Lichtbogen 15 aufgrund des anliegenden Stromes I gezündet. Dabei ist es möglich, dass während der Rückwärtsbewegung des Schweißdrahtes 13 der Schweißstrom I nochmals erhöht wird, um den Lichtbogen 15 bei verlängerter Lichtbogenlänge, also bei einem größeren Abstand zwischen Schweißdrahtende und dem Werkstück 16, besser und stabiler aufrecht zu erhalten. Der Schweißdraht 13 wird auf eine Grundposition, mit einem vordefinierten Abstand 32 zum Werkstück 16, zurückbewegt. Dieser Abstand 32 kann vom Benutzer definiert werden oder fix eingestellt sein.

Nach Erreichen dieser Grundposition ist die Startphase 27 abgeschlossen und es beginnt ab dem Zeitpunkt 33 der eigentliche Schweißprozess, beispielsweise ein Puls-Schweißprozess. Die Pulsschweißung wird abwechselnd durch eine Pulsstromphase 34 und eine Grundstromphase 35 gebildet, wobei in jeder Pulsstromphase 34 eine Tropfenablöse des Schweißdrahtes 13 erfolgt. Die Schweißspannung U und/oder der Schweißstrom I werden in der Grundstromphase 35 auf einem Grundwert 36 gehalten, bei dem der Lichtbogen 15 aufrecht erhalten wird und der Schweißdraht 13 in Richtung Werkstück 16 bewegt wird. In der Pulsstromphase 34, wird der Schweißstrom I über eine vorgegebene Zeitdauer 38 auf einen bestimmten Wert 37 erhöht, wodurch ein Tropfen 39 am Schweißdrahtende gebildet wird und eine Tropfenablöse erfolgt, wie dies beispielsweise zum Zeitpunkt 40 ersichtlich ist. Nach der Ablöse des Tropfens 39 ist die Pulsstromphase 34 beendet, es folgt wieder die Grundstromphase 35.

Da nach mehreren Tropfenablösungen nicht mehr exakt bestimmt werden kann, wie viel Schweißdraht 13 aufgeschmolzen wurde, kann die Position des Schweißdrahtendes nicht exakt bestimmt werden. Um eine genaue Position des Schweißdrahtes 13 bestimmen zu können, bzw. zu ermitteln oder neu einzustellen, wird ein mechanischer Abgleichsprozess 41 während des Schweißprozesses durchgeführt, der beispielsweise beim Puls-Schweißen zwischen zwei Pulsstromphasen 34 ausgeführt wird, wobei nach einem oder mehreren Prozessphasen 34 ein oder mehrere Abgleichsprozesse 41 durchgeführt werden können. Bei dem mechanischen Abgleichsprozess 41 wird der Schweißdraht 13 als Sensor verwendet. In diesem Ausführungsbeispiel wird der mechanische Abgleichsprozess 41 also bei einem kurzschlussfreien Schweißprozess, insbesondere bei einem Puls-Schweißprozess durchgeführt, wobei nach jeder dritten Pulsstromphase 34 der mechanische Abgleichsprozess 41 ausgeführt wird. Natürlich kann der Abgleichsprozess 41 auch in Kombination mit kurzschlussbehafteten Schweißprozessen, insbesondere einem Kurzlichtbogen-Schweißprozess durchgeführt werden.

Der mechanische Abgleichsprozess 41 wird eingesetzt, um die Position des Schweißdrahtes 13, insbesondere den Abstand 32 des Schweißdrahtendes zum Werkstück 16 zu ermitteln bzw. eine Korrektur oder Neueinstellung des Abstandes 32 vom Schweißdrahtende zum Werkstück 16 auf einen vorgegebenen Sollwert vorzunehmen.

Der mechanische Abgleichsprozess 41 wird in der Grundstromphase 35 durchgeführt, wodurch gewährleistet ist, dass am Schweißdrahtende kein Tropfen 38 gebildet wird und somit keine bzw. nur eine geringe Materialaufschmelzung bzw. Materialübergabe an das Werkstück 16 erfolgt. Der mechanische Abgleichsprozess 41 wird derart gebildet, dass der Schweißdraht 13 bis zur Kontaktierung mit dem Werkstück 16 in Richtung des Pfeiles 29 zum Werkstück 16 bewegt wird. Bei der Kontaktierung des Schweißdrahtes 13 mit dem Werkstück 16 entsteht somit ein bewusst gesteuerter Kurzschluss, der von der Steuervorrichtung 4 erkannt wird, wobei während des mechanischen Abgleichsprozesses eine Auflösung des Kurzschlusses durch Stromerhöhung von der Steuervorrichtung unterdrückt wird. Die Steuervorrichtung 4 erfasst die exakte Position des Schweißdrahtendes gegenüber dem Werkstück 16, welche beim Kurzschluss Null beträgt. Von dieser Ausgangsposition des Schweißdrahtes 13 beim Kurzschluss wird der Schweißdraht 13 vom Werkstück 16 bis zu einem bestimmten Abstand 32 wegbewegt.
Dies kann derart erfolgen, dass die Rückwärtsbewegung durch eine Drahtistwerterfassung, beispielsweise mit einem Inkrementalgeber, erfolgt, so dass mit einem Soll/Ist-Vergleich das Schweißdrahtende auf einen bestimmten Abstand 32 gefördert wird. Selbstverständlich ist es auch möglich, durch einfache Zeitvorgabe für die Rückwärtsbewegung eine vorgegebene Position bzw. einen vorgegebenen Abstand 32 des Schweißdrahtendes zu erreichen, da aufgrund der definierten Fördergeschwindigkeit und der Zeitvorgabe immer wieder die gleiche Position erreicht wird. Des weiteren kann natürlich auch nach verschiedenen anderen Methoden die Position des Schweißdrahtendes bzw. der Weg der Rückwärtsbewegung bzw. der Sollabstand zwischen dem Werkstück 16 und dem Schweißdrahtende eingesetzt werden. Es ist auch möglich, dass während des mechanischen Abgleichsprozesses 41 der Schweißbrenner zum Werkstück und wieder zurück bewegt wird.

Um die zeitliche Unterbrechung des Schweißprozesses durch den mechanischen Abgleichsprozess 41 kurz zu halten, wird während des Abgleichsprozesses 41 der Schweißdraht 13 zum Zeitpunkt 42 bevorzugt mit einer höheren Drahtfördergeschwindigkeit entsprechend dem Pfeil 43 während des Schweißprozesses (entsprechend Pfeil 29 in der Pulsstromphase 34 und Grundstromphase 35) zum Werkstück 16 gefördert. Dabei wird der Lichtbogen 15 bevorzugt aufrecht erhalten, jedoch eine Anschmelzung des Schweißdrahtes 13, also eine Tropfenbildung, vermieden. Somit erfolgt während des mechanischen Abgleichsprozesses 41 keine bzw. nur eine geringe Materialeinbringung vom Schweißdraht 13 an das Werkstück 16, also in das Schmelzbad. Die Erhöhung der Drahtvorschubgeschwindigkeit V kann auch bei der Rückwärtsbewegung des Schweißdrahtes 13 erfolgen. Das heißt, dass während des mechanischen Abgleichsprozesses 41 der Schweißstrom I und die Schweißspannung U gegenüber der Grundstromphase 35 nicht verändert werden, jedoch die Fördergeschwindigkeit V des Schweißdrahtes 13 erhöht wird, wie aus Fig. 4 ersichtlich. Selbstverständlich ist es möglich, dass eine Reduzierung bzw. Abschaltung des Schweißstromes I bzw. der Schweißspannung U erfolgen kann, um eine Anschmelzung des Schweißdrahtes 13 wirkungsvoll zu verhindern.

Von der Steuervorrichtung 4 wird über eine Kurzschlusserkennungsvorrichtung der Kurzschluss beim mechanischen Abgleichsprozess 41 erkannt, worauf die Steuervorrichtung 4 den Wert für den Abstand 32 des Schweißdrahtendes auf Null zurücksetzt. Nach der Kontaktierung bei Zeitpunkt 42 wird die Förderrichtung des Schweißdrahtes 13 in eine Rückwärtsbewegung umgedreht und der Schweißdraht 13 auf einen fix vorgegebenen bzw. einstellbaren Abstand 32 zurück gefördert. Dabei liegt der Abstand 32 bevorzugt zwischen 2 mm und 6 mm. Nach Erreichen des Abstandes 32 ist der mechanische Abgleichsprozess 41 zum Zeitpunkt 44 abgeschlossen und es wird der Schweißprozess fortgesetzt, während dessen die Drahtförderrichtung wieder in Richtung zum Werkstück 16 umgedreht wird.

Damit während des mechanischen Abgleichsprozesses 41 der Lichtbogen 15 wieder gezündet wird, ist es notwendig, dass nach dem Kurschluss ein ausreichend hoher Schweißstrom I vorgesehen ist, so dass beim Abheben des Schweißdrahtes 13 vom Werkstück 16 erneut ein Lichtbogen 15 gebildet wird. Es ist aber auch möglich, dass nach dem mechanischen Abgleichsprozess 41 der Lichtbogen 15 erst bei Erreichen des Abstandes 32 erneut gezündet wird. Dies kann beispielsweise mit einer HF-Zündung durchgeführt werden.

Die Durchführung bzw. der Auslösezeitpunkt des Abgleichsprozesses 41 kann vom Benutzer beliebig eingestellt werden. Dabei kann die Definition des Zeitpunkts des mechanischen Abgleichsprozesses 41 beispielsweise durch Angabe der Anzahl der Pulsstromphasen 34 oder durch Vorgabe eines Zeitintervalls erfolgen. Selbstverständlich ist es auch möglich, dass der Abgleichsprozess 41 zu fix vorgegebenen Zeiten erfolgt. Des weiteren ist es auch möglich, den Abgleichsprozess 41 durch ein Triggersignal auszulösen. Dies kann zum Beispiel durch Überwachung der Schweißspannung U erfolgen, wobei bei Über- oder Unterschreiten eines definierten Schwellwertes der Schweißspannung ein Triggersignal ausgelöst wird und von der Steuervorrichtung der mechanische Abgleichsprozess 41 gestartet wird.

Der mechanische Abgleichsprozess 41 erfolgt zur Ermittlung des Abstandes 32 des Schweißdrahtendes zum Werkstück bzw. zur Korrektur oder Neupositionierung des Schweißdrahtes 13. Beim mechanischen Abgleichsprozess 41 wird immer wieder ein definierter Abstand 32 der Schweißdrahtposition zum Werkstück 16 eingestellt, dadurch kann verhindert werden, dass bei einem länger andauernden Schweißprozess beispielsweise bei zu geringer Drahtfördergeschwindigkeit V der Schweißdraht 13 zum Kontaktrohr des Schweißbrenners zurückbrennt bzw. dass bei zu hoher Drahtfördergeschwindigkeit V die Lichtbogenlänge stetig verringert wird.

Der große Vorteil des mechanischen Abgleichsprozesses 41 liegt darin, dass der mechanische Abgleichsprozess 41 vom Schweißprozess unabhängig ist. Die Bestimmung der Position des Schweißdrahtes erfolgt somit unabhängig von den verwendeten Materialien, Gasen und anderen Schweißparametern, bei welchen sich die Lichtbogenspannung unproportional zur Lichtbogenlänge verhält. In einem solchen Fall wäre eine Ermittlung der Lichtbogenlänge über die Messung der Lichtbogenspannung nicht möglich. Darüber hinaus treten aufgrund von Bewegungen des Lichtbogens 15 am Werkstück 16 ständig Änderungen der Lichtbogenlänge auf, welche bei Ermittlung der Lichtbogenlänge über die Lichtbogenspannung zu Problemen führen würden.

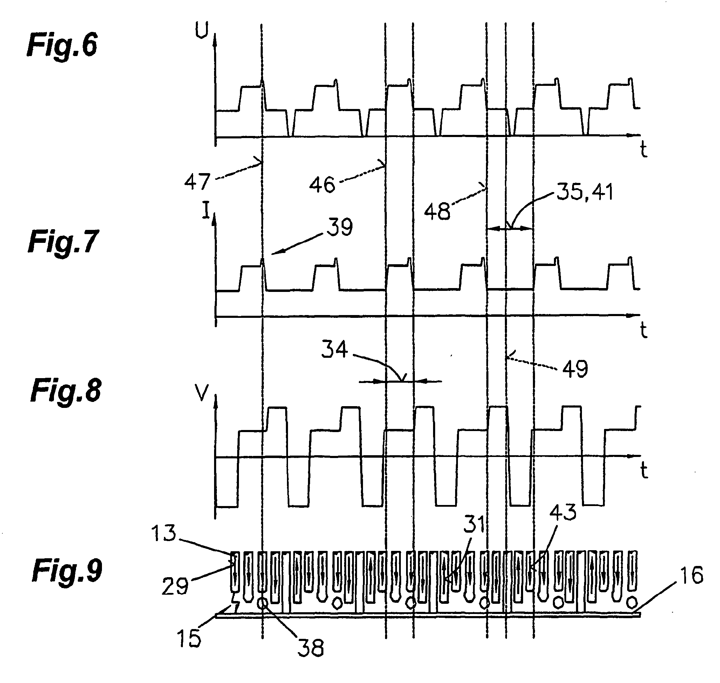

In dem weiteren Ausführungsbeispiel gemäß den Fig. 6 bis 9 wird zum Unterschied zum Ausführungsbeispiel gemäß den Fig. 2 bis 5 nach jeder Pulsstromphase 34 ein mechanischer Abgleichsprozess 41 durchgeführt.

Die Startphase des Puls-Schweißprozesses ist in den vorhergehenden Fig. 2 bis 5 beschrieben, daher wird darauf nicht mehr näher eingegangen, bzw. wurde auf die Darstellung verzichtet.

Nach der Startphase zum erstmaligen Zünden des Lichtbogens 15 führt der Schweißdraht 13 entsprechend Pfeil 29 eine kontinuierliche Bewegung in Richtung des Werkstückes 16 durch. Während der Pulsstromphase 34 wird zum Zeitpunkt 45 der Schweißstrom I, erhöht, um eine Tropfenbildung zu erzielen. Nach Ablauf einer Zeitdauer 38 erfolgt die Tropfenablösung, und die Pulsstromphase 34 ist abgeschlossen. In der darauffolgenden Grundstromphase 35 wird der mechanische Abgleichsprozess 41 durchgeführt.

Am Beginn des mechanischen Abgleichsprozesses 41, also zum Zeitpunkt 46, wird die Drahtvorschubgeschwindigkeit V gemäß Pfeil 43 erhöht und der Schweißdraht 13 bis zur Kontaktierung mit dem Werkstück 16 zum Zeitpunkt 47 gefördert. Die Höhe des Schweißstromes I während des mechanischen Abgleichsprozesses 41 ist derart eingestellt, dass nur ein möglichst reduziertes Anschmelzen des Schweißdrahtes 13 ohne Tropfenbildung erreicht wird. Nachdem von der Steuervorrichtung 4 über eine Kurzschlusserkennungsvorrichtung der Kurzschluss beim mechanischen Abgleichsprozess 41 erkannt wird, und die Steuervorrichtung 4 den Wert für den Abstand 32 des Schweißdrahtes 13 auf Null gesetzt hat, wird der Schweißdraht 13 wiederum in Richtung des Pfeiles 31 zurück bewegt, bis ein definierter Abstand 32 erreicht ist, worauf wiederum eine Umkehr der Drahtförderrichtung stattfindet. Anschließend wird die nächste Pulsstromphase 34 eingeleitet. Ein großer Vorteil dieses Ausführungsbeispiels liegt darin, dass bei Abstandsänderung des Schweißbrenners 10 zum Werkstück 16, wie dies bei Handschweißungen üblich ist oder bei Roboteranwendungen beim Überschweißen von Werkstückstufen, der Abstand 32 des Schweißdrahtendes zum Werkstück 16 sehr schnell korrigiert und somit konstant gehalten wird. Beispielsweise wird bei einer üblichen, wie aus dem Stand der Technik bekannten Handschweißung, bei welcher ein Puls-Schweißprozess verwendet wird, eine Taktung von 20 bis 70 Herz in der Sekunde verwendet. Dadurch muss der Benutzer keine zwingend-gleichmäßige Bewegung des Schweißbrenners 10 durchführen.

Bei einem Hand-Schweißprozess, bei welchem eine Pendelbewegung, bei der eine ständige Abstandsänderung des Schweißbrenners 10, bzw. des Schweißdrahtendes zum Werkstück 16, durchgeführt wird, ist durch denselben Vorteil eine verbesserte Schweißung zu erreichen.

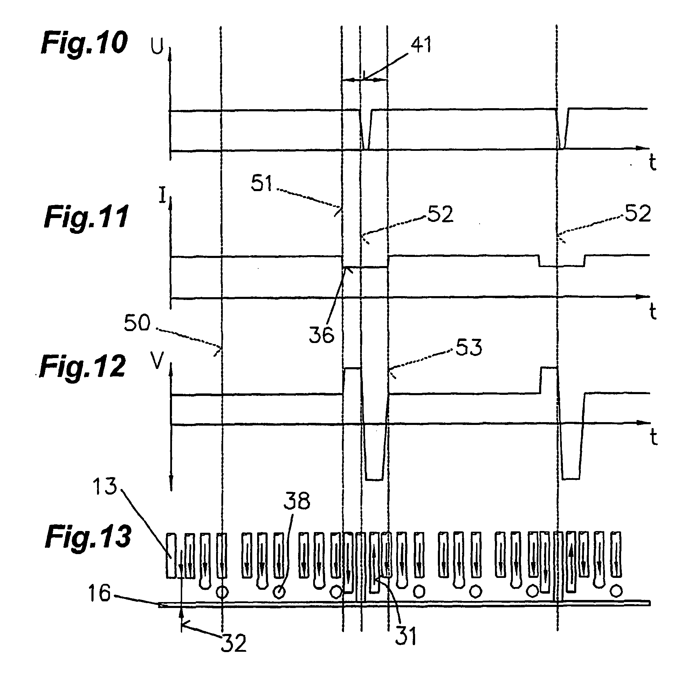

Ein weiteres Ausführungsbeispiel eines Schweißprozesses, insbesondere eines Puls-Schweißprozesses, ist in den Fig. 10 bis 13 dargestellt.

Auf die Startphase des Schweißprozesses wird wiederum nicht näher eingegangen, da diese in dem Ausführungsbeispiel der Fig. 2 bis 5 erläutert wird.

Der Schweißstrom I wird in diesem Ausführungsbeispiel während des Schweißprozesses auf einen vorgegebenen, konstanten Wert, wie beispielsweise bei einem Sprühlichtbogen-Schweißprozess, geregelt. Durch den angelegten Strom I bildet sich am Schweißdrahtende eine Tropfenkette 48 aus. Nach einer vorher vom Benutzer voreingestellten Zeit wird zum Zeitpunkt 51 der mechanische Abgleichsprozess 41 ausgeführt. Dabei wird beim mechanischen Abgleichsprozess 41 der Schweißstrom I auf einen Grundwert 36 abgesenkt, so dass keine weitere Materialübergabe stattfindet. Der Grundwert 36 wird derartig gewählt, dass ein geringes Anschmelzen des Schweißdrahtendes stattfindet, so dass ein Festkleben des Schweißdrahtes 13 am Werkstück 16 verhindert wird. Gleichzeitig wird der Schweißdraht 13 mit erhöhter Drahtfördergeschwindigkeit V in Richtung des Werkstückes 16 bis zum Kontakt mit dem Werkstück 16 gefördert. Durch den aus der Kontaktierung resultierenden Kurzschluss zum Zeitpunkt 52 bricht die Schweißspannung U zusammen. Der Kurzschluss beim mechanischen Abgleichsprozess 41 wird von der Steuervorrichtung 4 erkannt, worauf die Steuervorrichtung 4 den Wert des Abstandes 32 des Schweißdrahtendes zum Werkstück 16 auf Null setzt. Der Schweißdraht 13 führt dann eine Rückwärtsbewegung in Richtung des Pfeiles 31, also eine Bewegung vom Werkstück 16 in Richtung des Schweißbrenners 10, durch, bis der Abstand 32 erreicht ist. Der Schweißstrom I wird wieder auf den vorgegebenen Wert erhöht, und der mechanische Abgleichsprozess 41 ist zum Zeitpunkt 53 beendet, und der Schweißprozess beginnt von neuem bzw. wird weiter durchgeführt.

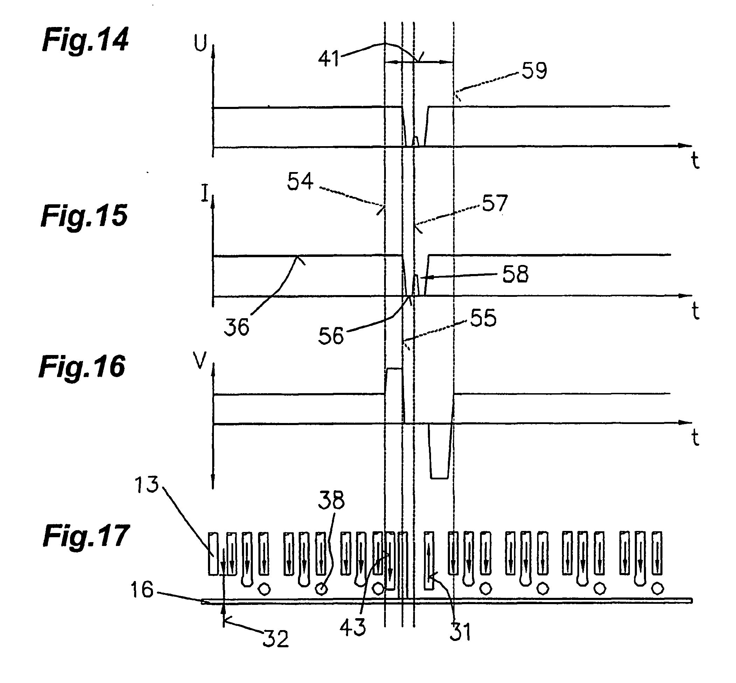

Anhand des Ausführungsbeispiels gemäß den Fig. 14 bis 17 wird eine weitere Variante beschrieben, bei der während des mechanischen Abgleichsprozesses 41 die Länge des vom Schweißstrom I durchflossenen Schweißdrahtes 13 gemessen wird. Der mechanische Abgleichsprozess 41 beginnt etwa zum Zeitpunkt 54 und endet zu einem Zeitpunkt 59. Dies ist insofern wichtig, da diese gemessene Drahtlänge einen wesentlichen Einfluss auf den Schweißprozess hat und somit eine Anpassung der Parameter für den Schweißprozess vorgenommen werden kann. Dies erfolgt derartig, dass nach Auftritt des Kurzschlusses, welcher zum Zeitpunkt 55 stattfindet, beispielsweise zum Zeitpunkt 57 ein vordefinierter Messstrom 58 eine vorgegebene Zeitdauer angelegt wird und die Spannung U zu diesem Zeitpunkt am Schweißdraht 13 gemessen wird. Die Steuervorrichtung 4 berechnet daraus den gesamten Widerstand. Aufgrund des bekannten spezifischen Widerstandes des Schweißdrahtes 13 wird von der Steuervorrichtung 4 anschließend die Länge des vom Schweißstrom durchflossenen Schweißdrahtes 13 berechnet. Der spezifische Widerstand kann dabei direkt eingegeben oder durch Einstellung des Materials des Schweißdrahtes 13 von der Steuervorrichtung 4 aus einem Speicher ausgelesen werden. Nach der durchgeführten Messung wird der mechanische Abgleichsprozess 41 fortgeführt.

Es ist auch möglich, dass vor dem durchzuführenden Schweißprozess der mechanische Abgleichsprozess 41 durchgeführt wird. Des weiteren kann der mechanische Abgleichsprozess 41 auch am Ende des Schweißprozesses durchgeführt werden, wodurch für den nächsten Schweißprozess ein definierter Abstand 32 des Schweißdrahtendes zum Werkstück 16, bzw. zum Kontakt-Rohr-Ende eingestellt werden kann. Somit ist gewährleistet, dass der Abstand 32 des Schweißdrahtendes zum Kontaktrohr des Schweißbrenners 10 beim Start einer nächsten, bzw. einer nachfolgenden Schweißung bekannt ist. Das Ergebnis des mechanischen Abgleichsprozesses 41 und der Ermittlung der Länge des vom Schweißstrom durchflossenen Schweißdrahtes 13 kann des weiteren auch einer Robotersteuerung übermittelt werden.

## Patentansprüche

1. Verfahren zum Steuern und/oder Regeln eines Schweißprozesses, mit einem abschmelzenden Schweißdraht (13), bei dem nach dem Zünden eines Lichtbogens ein aus mehreren unterschiedlichen Schweißparametern eingestellter Schweißprozess, der von einer Steuervorrichtung und/oder einer Schweißstromquelle gesteuert bzw. geregelt wird, durchgeführt wird, **dadurch gekennzeichnet, dass** während des Schweißprozesses zumindest ein mechanischer Abgleichsprozess (41) zur Ermittlung der Position des Schweißdrahtes (13) durchgeführt wird, wobei der Schweißdraht (13) als Sensor verwendet wird, dass während des mechanischen Abgleichsprozesses (41) eine Kontaktierung des Schweißdrahtes (13) mit dem Werkstück (16) durchgeführt wird, indem der Schweißdraht (13) zum Werkstück (16) bewegt wird, und dass der Schweißdraht (13) nach der Kontaktierung mit dem Werkstück (16) zurück bewegt wird.

2. Verfahren nach Anspruch 1, **dadurch gekennzeichnet, dass** während des mechanischen Abgleichsprozesses (41) die Schweißparameter, insbesondere der Schweißstrom (I) so geregelt wird, dass keine bzw. nur eine geringe Materialaufschmelzung des Schweißdrahtes (13) erfolgt.

3. Verfahren nach Anspruch 1 oder 2, **dadurch gekennzeichnet, dass** während der Bewegung des Schweißdrahtes (13) zum Werkstück (16) die Schweißparameter so geregelt werden, dass der Lichtbogen (15) bis unmittelbar vor der Kontaktierung des Schweißdrahtes (13) mit dem Werkstück (16) aufrecht erhalten bleibt, jedoch eine Aufschmelzung des Schweißdrahtes (13) vermieden wird.

4. Verfahren nach einem der Ansprüche 1 bis 3, **dadurch gekennzeichnet, dass** die Kontaktierung des Schweißdrahtes (13) am Werkstück (16) über Erkennung des Kurzschlusses erfasst wird.

5. Verfahren nach Anspruch 4, **dadurch gekennzeichnet, dass** nach der Erfassung der Kontaktierung die Position des Schweißdrahtendes neu initialisiert, insbesondere auf Null zurückgesetzt wird.

6. Verfahren nach einem der Ansprüche 1 bis 5, **dadurch gekennzeichnet, dass** nach der Kontaktierung des Schweißdrahtes (13) mit dem Werkstück (16) der Schweißdraht (13) auf einen fix vorgegebenen oder einstellbaren Abstand (32) zum Werkstück (16) vorzugsweise 2 mm bis 6 mm von diesem weg bewegt wird.

7. Verfahren nach Anspruch 6, **dadurch gekennzeichnet, dass** der Abstand (32) über die Schweißspannung (U), den Schweißstrom (I) oder über die Zeit (t) während der Bewegung des Schweißdrahtes (13) ermittelt wird.

8. Verfahren nach einem der Ansprüche 1 bis 7, **dadurch gekennzeichnet, dass** der mechanische Abgleichsprozess (41) durch Einstellungen, welche vom Benutzer gewählt oder fix vorgegeben sind, ausgelöst wird.

9. Verfahren nach einem der Ansprüche 1 bis 8, **dadurch gekennzeichnet, dass** der mechanische Abgleichsprozess (41) durch ein Triggersignal, beispielsweise ein Schwellwert für die Schweißspannung (U), ausgelöst wird.

10. Verfahren nach einem der Ansprüche 1 bis 8, **dadurch gekennzeichnet, dass** der mechanische Abgleichsprozess (41) zu definierten Zeiten, nach Ablauf definierter Zeitspannen oder nach Ablauf einer definierten Anzahl von Pulsen des Schweißprozesses ausgelöst wird.

11. Verfahren nach einem der Ansprüche 1 bis 10, **dadurch gekennzeichnet, dass** während des mechanischen Abgleichsprozesses (41) die Drahtvorschubgeschwindigkeit (V) erhöht wird.

12. Verfahren nach einem der Ansprüche 1 bis 11, **dadurch gekennzeichnet, dass** der mechanische Abgleichsprozess (41) während einer Grundstromphase (35) des Schweißprozesses, also zwischen zwei Impulsen des Schweißprozesses durchgeführt wird.

13. Verfahren nach einem der Ansprüche 1 bis 12, **dadurch gekennzeichnet, dass** während des mechanischen Abgleichsprozesses (41) die Länge des vom Schweißstrom durchflossenen Schweißdrahtes (13) gemessen wird.

14. Verfahren nach einem der Ansprüche 1 bis 13, **dadurch gekennzeichnet, dass** während des mechanischen Abgleichsprozesses (41) beim Abheben des Schweißdrahtes (13) vom Werkstück (16) der Lichtbogen (15) erneut gezündet wird.

15. Verfahren nach einem der Ansprüche 1 bis 13, **dadurch gekennzeichnet, dass** während des mechanischen Abgleichsprozess (41) bei Erreichen des gewünschten Abstandes (32) der Lichtbogen (15) gezündet wird.

16. Verfahren nach einem der Ansprüche 1 bis 15, **dadurch gekennzeichnet, dass** am Beginn des Schweißprozesses ein mechanischer Abgleichsprozess (41) durchgeführt wird.

17. Verfahren nach einem der Ansprüche 1 bis 16, **dadurch gekennzeichnet, dass** am Ende des Schweißprozesses ein mechanischer Abgleichsprozess (41) durchgeführt wird, so dass für den nächsten Schweißprozess ein definierter Abstand (32) des Schweißdrahtendes zum Werkstück (16) einstellbar ist.

18. Verfahren nach einem der Ansprüche 1 bis 17, **dadurch gekennzeichnet, dass** die beim mechanischen Abgleichsprozess (41) ermittelte Position des Schweißdrahtes (13) und allenfalls die ermittelte Länge des vom Schweißstrom durchflossenen Schweißdrahtes (13) an eine Robotersteuerung weitergeleitet wird.

## Claims

1. A method for controlling and/or regulating a welding process using a melting welding wire (13), wherein a welding process adjusted on the basis of several different welding parameters and controlled or respectively regulated by a control device and/or a welding current source is carried out after the ignition of an electric arc, **characterized in that** at least one mechanical adjustment process (41) is carried out during the welding process to determine the position of the welding wire (13), using the welding wire (13) as a sensor, that during the mechanical adjustment process (41), contacting of the welding wire (13) with the workpiece (16) is effected by moving the welding wire (13) towards the workpiece (16), and that the welding wire (13) is moved back after contacting with the workpiece (16).

2. A method according to Claim 1, **characterized in that**, during the mechanical adjustment process (41), the welding parameters, in particular the welding current (I), are controlled in a manner that no or only little material melting of the welding wire (13) is effected.

3. A method according to Claim 1 or 2, **characterized in that**, during the movement of the welding wire (13) towards the workpiece (16), the welding parameters are regulated in a manner such that the electric arc (15) is maintained until immediately before the contacting of the welding wire (13) with the workpiece (16), however while avoiding melting of the welding wire (13).

4. A method according to Claims 1 to 3, **characterized in that** contacting of the welding wire (13) on the workpiece (16) is detected via recognition of the short circuit.

5. A method according to Claim 4, **characterized in that**, after the detection of the contacting, the position of the end of the welding wire is newly initialized and, in particular, reset to zero.

6. A method according to any one of Claims 1 to 5, **characterized in that**, after contacting of the welding wire (13) with the workpiece (16), the welding wire (13) is moved away from the workpiece (16) to a fixedly pregiven or adjustable distance (32), preferably 2mm to 6mm, relative to the same.

7. A method according to Claim 6, **characterized in that** the distance (32) is determined via the welding voltage (U), the welding current (I) or the time (t) during the movement of the welding wire (13).

8. A method according to any one of Claims 1 to 7, **characterized in that** the mechanical adjustment process (41) is initiated by settings selected by the user or by fixed defaults.

9. A method according to any one of Claims 1 to 8, **characterized in that** the mechanical adjustment process (41) is initiated by a trigger signal, for instance a threshold value for the welding voltage (U).

10. A method according to any one of claims 1 to 8, **characterized in that** the mechanical adjustment process (41) is initiated at defined times, after the expiration of defined time intervals or after the expiration of a defined number of welding process pulses.

11. A method according to any one of Claims 1 to 10, **characterized in that** the wire advance speed (V) is increased during the mechanical adjustment process (41).

12. A method according to any one of Claims 1 to 11, **characterized in that** the mechanical adjustment process (41) is carried out during a base current phase (35) of the welding process, i.e., between two pulses of the welding process.

13. A method according to any one of Claims 1 to 12, **characterized in that** the length of the welding wire (13) through which welding current flows is measured during the mechanical adjustment process (41).

14. A method according to any one of Claims 1 to 13, **characterized in that** the electric arc (15) is newly ignited during the mechanical adjustment process (41) as the welding wire (13) is lifted off the workpiece (16).

15. A method according to any one of Claims 1 to 13, **characterized in that** the electric arc (15) is newly ignited during the mechanical adjustment process (41) as the desired distance (32) is reached.

16. A method according to any one of Claims 1 to 15, **characterized in that** a mechanical adjustment process (41) is carried out at the beginning of the welding process.

17. A method according to any one of Claims 1 to 16, **characterized in that** a mechanical adjustment process (41) is carried out at the end of the welding process so as to enable the adjustment of a defined distance (32) of the end of the welding wire relative to the workpiece (16) for the subsequent welding process.

18. A method according to any one of Claims 1 to 17, **characterized in that** the position of the welding wire (13) determined during the mechanical adjustment process (41), and optionally the determined length of the welding wire (13) through which welding current flows, are transmitted to a robot control.

## Revendications

1. Procédé de commande et/ou de régulation d'un processus de soudage avec une baguette de soudage (13) à fusion, dans lequel après l'allumage d'un arc électrique, est exécuté un processus de soudage réglé à partir de plusieurs paramètres de soudage différents, lequel est commandé ou régulé par un dispositif de commande et/ou une source de courant de soudage, **caractérisé en ce que** pendant le processus de soudage au moins un processus mécanique d'égalisation (41) est exécuté pour déterminer la position de la baguette de soudage (13), la baguette de soudage (13) étant utilisée comme capteur, **en ce que** pendant le processus mécanique d'égalisation (41), il est procédé à une mise en contact de la baguette de soudage (13) et de la pièce à usiner (16), **en ce que** la baguette de soudage (13) est déplacée vers la pièce à usiner (16) et **en ce que** la baguette de soudage (13) est reculée après la mise en contact avec la pièce à usiner (16).

2. Procédé selon la revendication 1, **caractérisé en ce que** pendant le processus mécanique d'égalisation (41), les paramètres de soudage, en particulier le courant de soudage (I) est régulé de manière qu'il ne se produise aucune fusion du matériau de la baguette de soudage (13), ou seulement une fusion réduite du matériau.

3. Procédé selon la revendication 1 ou 2, **caractérisé en ce que** pendant le déplacement de la baguette de soudage (13) vers la pièce à usiner (16), les paramètres de soudage sont régulés de manière que l'arc électrique (15) soit maintenu jusqu'à immédiatement avant la mise en contact de la baguette de soudage (13) et de la pièce à usiner (16), mais de manière à éviter une fusion de la baguette de soudage (13).

4. Procédé selon l'une quelconque des revendications 1 à 3, **caractérisé en ce que** la mise en contact de la baguette de soudage (13) sur la pièce à usiner (16) est détectée par reconnaissance du court-circuit.

5. Procédé selon la revendication 4, **caractérisé en ce qu'**après détection de la mise en contact, la position de l'extrémité de la baguette de soudage est réinitialisée, en particulier replacée sur zéro.

6. Procédé selon l'une quelconque des revendications 1 à 5, **caractérisé en ce qu'**après la mise en contact de la baguette de soudage (13) avec la pièce à usiner (16), la baguette de soudage (13) est éloignée de la pièce à usiner (16) d'une distance (32) prédéfinie de manière fixe ou réglable, de préférence de 2 mm à 6 mm.

7. Procédé selon la revendication 6, **caractérisé en ce que** la distance (32) est déterminée à travers la tension de soudage (U), le courant de soudage (I) ou le temps (t) pendant le déplacement de la baguette de soudage (13).

8. Procédé selon l'une quelconque des revendications 1 à 7, **caractérisé en ce que** le processus mécanique d'égalisation (41) est déclenché par des réglages qui sont choisis par l'utilisateur ou prédéfinis de manière fixe.

9. Procédé selon l'une quelconque des revendications 1 à 8, **caractérisé en ce que** le processus mécanique d'égalisation (41) est déclenché par un signal de déclencheur, par exemple une valeur de seuil de la tension de soudage (U).

10. Procédé selon l'une quelconque des revendications 1 à 8, **caractérisé en ce que** le processus mécanique d'égalisation (41) est déclenché à des instants définis, après expiration d'intervalles de temps définis ou après expiration d'un nombre défini d'impulsions du processus de soudage.

11. Procédé selon l'une quelconque des revendications 1 à 10, **caractérisé en ce que** la vitesse d'avance de la baguette (V) est augmentée pendant le processus mécanique d'égalisation (41).

12. Procédé selon l'une quelconque des revendications 1 à 11, **caractérisé en ce que** le processus mécanique d'égalisation (41) est exécuté pendant une phase de courant de base (35) du processus de soudage, c'est-à-dire entre deux impulsions du processus de soudage.

13. Procédé selon l'une quelconque des revendications 1 à 12, **caractérisé en ce que** la longueur de la baguette de soudage (13) traversée par le courant de soudage est mesurée pendant le processus mécanique d'égalisation (41).

14. Procédé selon l'une quelconque des revendications 1 à 13, **caractérisé en ce que** l'arc électrique (15) est à nouveau allumé pendant le processus mécanique d'égalisation (41), lorsque la baguette de soudage (13) est relevée de la pièce à usiner (16).

15. Procédé selon l'une quelconque des revendications 1 à 13, **caractérisé en ce que** l'arc électrique (15) est allumé pendant le processus mécanique d'égalisation (41), lorsque la distance (32) souhaitée est atteinte.

16. Procédé selon l'une quelconque des revendications 1 à 15, **caractérisé en ce qu'**un processus mécanique d'égalisation (41) est exécuté au début du processus de soudage.

17. Procédé selon l'une quelconque des revendications 1 à 16, **caractérisé en ce qu'**un processus mécanique d'égalisation (41) est exécuté à la fin du processus de soudage, de manière qu'une distance (32) définie de l'extrémité de la baguette de soudage par rapport à la pièce à usiner (16) soit réglable pour le processus de soudage suivant.

18. Procédé selon l'une quelconque des revendications 1 à 17, **caractérisé en ce que** la position de la baguette de soudage (13), déterminée lors du processus mécanique d'égalisation (41) et éventuellement la longueur déterminée de la baguette de soudage (13), traversée par le courant de soudage, est transmise à une commande de robot.
